# EUROPÄISCHE PATENTANMELDUNG

(11) **EP 1 595 648 A2**
(43) Veröffentlichungstag der Anmeldung: **16.11.2005**
(21) Anmeldenummer: 05010050.2
(22) Anmeldetag: 09.05.2005
(51) Int. Cl.: B25B 5/10, B23B 27/16

(54) **Zweigeteilte Spannpratze**

(30) Priorität: 13.05.2004 DE 102004023570
(71) Anmelder: CeramTec AG, 73207 Plochingen (DE)
(72) Erfinder: Zitzlaff, Wolfgang, 73230 Kirchheim/Teck (DE)
(74) Vertreter: Scherzberg, Andreas Hans

(57) **Zusammenfassung**

Die Erfindung betrifft eine Spannpratze mit einem Befestigungsschenkel (1) und einem Spannschenkel (2) zur Befestigung eines Gegenstandes (50) in einer ersten Ausnehmung (3) einer Unterlage (40), wobei die Spannpratze im Einbauzustand über ihren Befestigungsschenkel (1) mit einem Bolzen (30) auf der Unterlage (40) befestigt ist und mit ihrem Spannschenkel (2) den Gegenstand (50) in der Ausnehmung (3) einspannt.

Zur Aufteilung der axialen Kraftbeaufschlagung eines Gegenstandes durch eine Spannpratze teilweise in eine quer dazu wirkende Kraftbeaufschlagung wird vorgeschlagen,
- dass die Spannpratze aus zwei Teilen, nämlich einem Spannsockel (10) und einem Spannfinger (20) besteht,
- dass der Spannsockel (10) im Einbauzustand der Spannpratze auf der Unterlage (40) aufsitzt,
- dass der Spannfinger (20) einen Befestigungsschenkel (26) und einen Spannschenkel (27) aufweist und im Einbauzustand der Befestigungsschenkel (26) über eine als Gleitfläche (13, 21) ausgebildete schiefe Ebene auf dem Spannsockel (10) aufsitzt und mit seinem Spannschenkel (27) den Gegenstand (50) einspannt und
- dass beim Spannen der Bolzen (30) den Befestigungsschenkel (26) des Spannfingers (20) auf den Spannsockel (10) drückt und beide auf der Unterlage (40) befestigt, wobei durch die als Gleitfläche (13, 21) ausgebildete schiefe Ebene der Befestigungsschenkel (26) und damit der Spannschenkel (27) des Spannfingers (20) eine quer zur Längsachse (14) des Spannsockels (20) liegende seitliche Bewegung ausführt.

## Beschreibung

Die Erfindung betrifft eine Spannpratze nach dem Oberbegriff des Anspruchs 1.

Spannpratzen werden allgemein zur Befestigung eines Gegenstandes in einer Ausnehmung einer Unterlage eingesetzt. Die Spannpratzen weisen einen Befestigungsschenkel und einen Spannschenkel auf, wobei die Spannpratze im Einbauzustand über ihren Befestigungsschenkel mit einem Bolzen auf der Unterlage befestigt ist und mit ihrem Spannschenkel den Gegenstand in der Ausnehmung einspannt.

Derartige Spannpratzen werden zum Beispiel als Teil eines Schneidwerkzeuges zur Zerspanung von metallischen Werkstoffen verwendet, wobei die Unterlage auch als Klemmhalter bezeichnet wird. Der mit der Spannpratze eingespannte Gegenstand ist dabei eine Schneidplatte aus einer Keramik, Hartmetall oder einem anderen zur Zerspanung geeigneten Werkstoff.

Der Erfindung liegt die Aufgabe zu Grunde, die axiale Kraftbeaufschlagung eines Gegenstandes durch eine Spannpratze teilweise in eine quer dazu wirkende Kraftbeaufschlagung umzuwandeln, so dass der Gegenstand nicht nur auf die Unterlage sondern auch an die Seitenwand der Ausnehmung gedrückt wird..

Erfindungsgemäß wird diese Aufgabe durch die Merkmale des Anspruchs 1 gelöst.

Dadurch,
- dass die Spannpratze aus zwei Teilen, nämlich einem Spannsockel und einem Spannfinger besteht,
- dass der Spannsockel im Einbauzustand der Spannpratze auf der Unterlage aufsitzt,
- dass der Spannfinger einen Befestigungsschenkel und einen Spannschenkel aufweist und im Einbauzustand der Befestigungsschenkel über eine als Gleitfläche ausgebildete schiefe Ebene auf dem Spannsockel aufsitzt und mit seinem Spannschenkel den Gegenstand einspannt und
- dass beim Spannen der Bolzen den Befestigungsschenkel des Spannfingers auf den Spannsockel drückt und beide auf der Unterlage befestigt, wobei durch die als Gleitfläche ausgebildete schiefe Ebene der Befestigungsschenkel und damit der Spannschenkel des Spannfingers eine quer zur Längsachse des Spannsockels liegende seitliche Bewegung ausführt,
ist die Kraftbeaufschlagung der Spannpratze auf den Gegenstand aufgeteilt in eine axiale Komponente und eine quer hierzu wirkende Komponente.

Damit die quer zur axialen Komponente wirkende Komponente den Gegenstand in die Ausnehmung der Unterlage zieht, ist im Gegenstand z.B. eine Mulde angeordnet, in die z. B. ein Nocken am Spannschenkel des Spannfingers eingreift.

Vorteilhaft ist der Spannsockel verdrehsicher aber in Spannrichtung verschiebbar auf der Unterlage befestigt. Hierzu ist am Spannsockel zumindest eine sich parallel zur Längsachse des Spannsockels erstreckende Auskragung angeordnet, die in einen hieran angepassten Längsschlitz in der Unterlage eingreift.

In bevorzugter Ausführungsform weist der Spannsockel an seinem zum Befestigungsschenkel des Spannfingers gewandten Ende eine als Gleitfläche ausgebildete schiefe Ebene auf und weist der Befestigungsschenkel des Spannfingers an seinem zum Spannsockel gewandten Ende ebenfalls eine als Gleitfläche ausgebildete schiefe Ebene auf. Beide Gleitflächen sind aneinander angepasst und aufeinander gleitend ausgebildet.

Bevorzugt liegt der Spannsockel im Einbauzustand mit einer ersten Führungsfläche an einer zweiten Führungsfläche am Befestigungsschenkel so an, dass der Befestigungsschenkel des Spannfingers verdrehsicher auf dem Spannsockel angeordnet ist. Da auch der Spannsockel im Einbauzustand auf der Unterlage verdrehsicher aufsitzt, ist auch der Spannfinger verdrehsicher auf der Unterlage angeordnet. Dies ist nötig, um eine korrekte Einspannung des Gegenstandes zu erreichen.

Vorteilhafterweise weist der Spannsockel einen auskragenden Flansch auf, mit dem der Spannsockel im Einbauzustand auf eine Ausnehmung in der Unterlage aufsitzt.

Bevorzugt ist die Spannpratze ein Teil eines Schneidwerkzeuges zur Zerspanung von metallischen Werkstoffen, wobei die Unterlage ein Klemmhalter und der Gegenstand eine Schneidplatte ist.

In vorteilhafter Ausführungsform ist am Spannschenkel des Spannfingers eine Erhebung, wie z. B. ein Nocken angeordnet, die bzw. der im Einbauzustand in eine entsprechende Mulde im Gegenstand bzw. in der Schneidplatte eingreift.

In erfindungsgemäßer bevorzugten Ausgestaltung ist die Erhebung oder der Nocken am Spannschenkel des Spannfingers als kreisförmiger Ring ausgebildet, die bzw. der im Einbauzustand in einen Gegenstand bzw. eine Schneidplatte mit einer kugel- oder kreisförmigen Erhebung eingreift und hierbei die Erhebung umgreift.

Nachfolgend wird die Erfindung an Hand von sechs Figuren näher erläutert.

Die Erfindung beschreibt zur Befestigung von Gegenständen eine Spannpratze, die aus zwei Teilen 10, 20 besteht. Das erste Teil, der Spannsockel 10 ragt als führendes Teil auf einer Unterlage 40 in eine passende Ausnehmung 41 hinein und wird durch seine Form 11 (siehe weiter unten) vor einer Verdrehung gesichert. Auf diesen Spannsockel 10 ist ein Spannfinger 20 mit seinem Befestigungsschenkel 26 aufgesetzt und über einen Bolzen 30 auf der Unterlage befestigt. An dem anderen Ende des Spannfingers 20, dem Spannschenkel 27, spannt dieser einen Gegenstand 50 in eine Ausnehmung 3 einer Unterlage 40. Dieser Spannsockel 10 vollzieht beim Spannen, mittels eines durch beide Teile hindurchragenden Bolzen 30, eine Bewegung in Achsrichtung des Bolzen 30 bzw. in Richtung der Längsachse 14 des Spannsockels 10 aus. Dieser Bolzen 30 ist in der Unterlage 40 geführt bzw. befestigt.

Diese Bewegung ist als besonderes Merkmal durch einen Flansch 12 begrenzt, der letztendlich auf der Unterlage 40 aufliegt. Wenn durch diese Begrenzung das Ende der axialen Bewegung erreicht ist, vollzieht als weiteres besonderes Merkmal der Befestigungsschenkel 26 des Spannfingers 20 eine quer zur Längsachse 14 des Spannsockels 10 liegende seitliche Bewegung aus, bis die gewünschte Spannkraft durch den Bolzen 30 endgültig erreicht ist.

Dies ist dadurch bedingt, dass der Spannsockel 10 an seinem zum Befestigungsschenkel 26 des Spannfingers 20 gewandten Ende eine als Gleitfläche 13 ausgebildete schiefe Ebene aufweist und der Befestigungsschenkel 26 des Spannfingers 20 an seinem zum Spannsockel 10 gewandten Ende ebenfalls eine als Gleitfläche 21 ausgebildete schiefe Ebene aufweist und beide Gleitflächen 13, 21 aneinander angepasst und aufeinander gleitend ausgebildet sind.

Dabei gleitet also der Spannfinger 20 mit der Gleitfläche 21 des Befestigungsschenkels 21 über die angepasste Gleitfläche 13 des Spannsockels 10. Das erfinderische Merkmal dieser beiden Gleitflächen 21 und 13 ist die aufeinander angepasste Form und die Ausprägung als schiefe Ebene. Diese Gleitbewegung ist wiederum durch eine besondere Vorrichtung 22 geführt und begrenzt. Diese Vorrichtung 22 ist hier ein Anschlag.

Wenn diese Quer- und Gleitbewegung abgeschlossen ist, und durch den Bolzen 30 der gewünschte Spanndruck erreicht ist, kann der Spannschenkel 27 des Spannfingers 20 den Gegenstand 50, durch den ausgeübten Spanndruck und seine speziell aufeinander abgestimmte Form und Oberfläche, sicher spannen und in seiner Position unverrückbar halten.

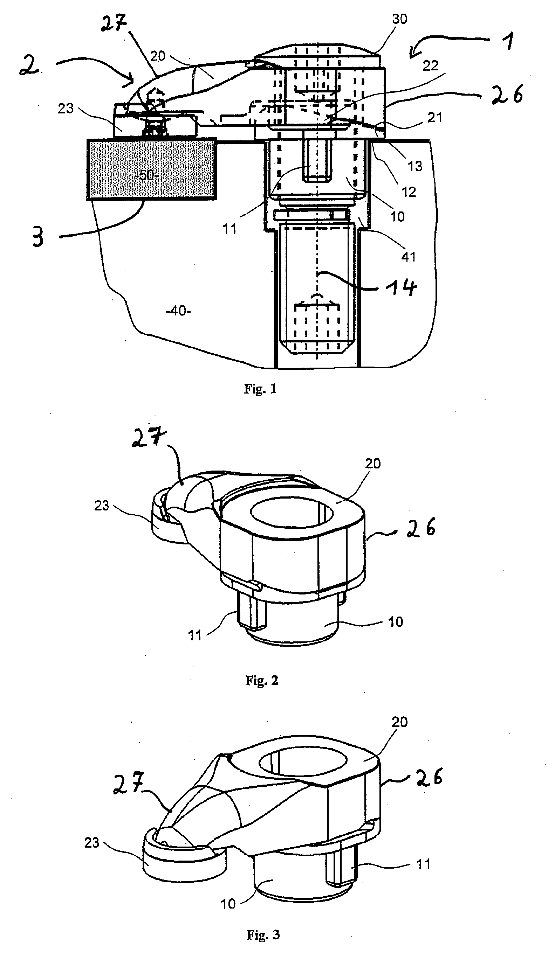

Die Figuren 2 und 3 zeigen den Spannfinger 20 aufgesetzt auf den Spannsockel 10 mit seiner Form 11, hier eine sich in Axialrichtung erstreckende Auskragung 11. An der Spitze des Spannschenkels 27 des Spannfingers 20 ist z.B. eine Druckplatte 23 angeordnet, mit der der Gegenstand 50 auf die Unterlage 40 in die Ausnehmung 3 gespannt wird. Auf der Druckplatte 23 ist eine Erhebung 28 z. B. ein Nocken angeordnet, der in eine angepasste Mulde im Gegenstand 50 eingreift. Die Erhebung 28 kann auch direkt am Spannschenkel 27 des Spannfingers 20 angeordnet sein.

Diese Erhebung 28 oder der Nocken am Spannschenkel 27 des Spannfingers 20 ist z. B. als kreisförmiger Ring ausgebildet, der in einen Gegenstand 50 mit einer kugel- oder kreisförmigen Erhebung eingreift und hierbei die Erhebung umgreift.

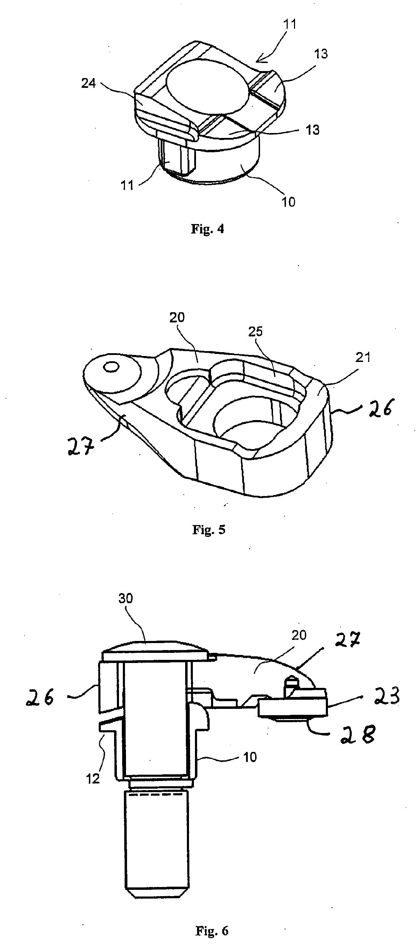

Figur 4 zeigt den Spannsockel 10 mit seiner Gleitfläche 13, die als Schräge ausgebildet ist. Auf dieser Gleitfläche 13 gleitet die hieran angepasste Gleitfläche 21 des Befestigungsschenkels 26 des Spannfingers 20, siehe Figur 5. Es ist hier deutlich die erste Führungsfläche 24 der besonderen Vorrichtung 22 aus Figur 1 zu sehen.

Figur 5 zeigt den Spannfinger 20 von seiner Unterseite. Hier ist die Gegenseite der besonderen Vorrichtung 22 aus Figur 1 mit seiner an die erste Führungsfläche 24 des Spannsockels 10 angepassten zweiten Führungsflächen 25 am Befestigungsschenkel 26 zu sehen.

In der Figur 6 ist in einem Schnitt die gesamte Spannpratze mit dem Spannsockel 10 und dem aufgesetzten Spannfinger 20 und mit einem eingreifenden Bolzen 30 gezeigt. Der Spannsockel 10 und der Spannfinger 20 sind auf einer Unterlage 40 durch den Bolzen 30 befestigt (siehe Figur 1).

Dieses Prinzip kann zum Beispiel in der Zerspanung seine Anwendung finden. Heutiger Stand der Technik bei der Zerspanung von metallischen Werkstoffen ist die Verwendung von verschiedensten Trägerwerkzeugen, auf denen in einer als Plattensitz benannten Ausnehmung ein Schneideinsatz, bezeichnet als Wendeschneidplatte, aus hartem und verschleißfestem Werkstoff befestigt ist. Dieser Schneideinsatz oder die Wendeschneidplatte übernimmt durch Eindringen in die Werkstückoberfläche und einer Dreh- und Vorschubbewegung von Werkzeug und Werkstück den eigentlichen Materialabtrag. Der Gegenstand 50 ist daher bevorzugt eine Schneidplatte aus einer Keramik oder aus Hartmetall.

Das wichtigste Kriterium bei diesem Zerspanungsvorgang ist die richtige, sichere und gezielte Befestigung der Wendeschneidplatte durch die Benutzung einer Klemmschraube, eines Keiles oder einer Spannpratze. Bei der Benutzung einer Spannpratze wird diese meist mittels einer Schraube, die durch die Spannpratze ragt, auf dem Trägerwerkzeug unverrückbar befestigt. Beim Befestigungsvorgang sollte nach Möglichkeit sichergestellt werden, dass die Wendeschneiplatte an den Seitenwänden des Plattensitzes eng anliegt.

Der Vorteil dieser Erfindung liegt in der Kombination, die axiale Bewegung beim Spannen über eine schiefe Ebene teilweise in eine quer dazu wirkende Bewegung umzuwandeln.

## Patentansprüche

1. Spannpratze mit einem Befestigungsschenkel (1) und einem Spannschenkel (2) zur Befestigung eines Gegenstandes (50) in einer ersten Ausnehmung (3) einer Unterlage (40), wobei die Spannpratze im Einbauzustand über ihren Befestigungsschenkel (1) mit einem Bolzen (30) auf der Unterlage (40) befestigt ist und mit ihrem Spannschenkel (2) den Gegenstand (50) in der Ausnehmung (3) einspannt,
**dadurch gekennzeichnet,**
- **dass** die Spannpratze aus zwei Teilen, nämlich einem Spannsockel (10) und einem Spannfinger (20) besteht,
- **dass** der Spannsockel (10) im Einbauzustand der Spannpratze auf der Unterlage (40) aufsitzt,
- **dass** der Spannfinger (20) einen Befestigungsschenkel (26) und einen Spannschenkel (27) aufweist und im Einbauzustand der Befestigungsschenkel (26) über eine als Gleitfläche (13, 21) ausgebildete schiefe Ebene auf dem Spannsockel (10) aufsitzt und mit seinem Spannschenkel (27) den Gegenstand (50) einspannt und
- **dass** beim Spannen der Bolzen (30) den Befestigungsschenkel (26) des Spannfingers (20) auf den Spannsockel (10) drückt und beide auf der Unterlage (40) befestigt, wobei durch die als Gleitfläche (13, 21) ausgebildete schiefe Ebene der Befestigungsschenkel (26) und damit der Spannschenkel (27) des Spannfingers (20) eine quer zur Längsachse (14) des Spannsockels (20) liegende seitliche Bewegung ausführt.

2. Spannpratze nach Anspruch 1,
**dadurch gekennzeichnet, dass** zur verdrehsicheren Befestigung des Spannsockels (10) auf der Unterlage (40) am Spannsockel (10) zumindest eine sich parallel zur Längsachse (14) des Spannsockels (10) erstreckende Auskragung (11) angeordnet ist, die in einen hieran angepassten Längsschlitz in der Unterlage (40) eingreift.

3. Spannpratze nach Anspruch 1 oder 2,
**dadurch gekennzeichnet, dass** der Spannsockel (10) an seinem zum Befestigungsschenkel (26) des Spannfingers (20) gewandten Ende eine als Gleitfläche (13) ausgebildete schiefe Ebene aufweist und der Befestigungsschenkel (26) des Spannfingers (20) an seinem zum Spannsockel (10) gewandten Ende ebenfalls eine als Gleitfläche (21) ausgebildete schiefe Ebene aufweist und beide Gleitflächen (13, 21) aneinander angepasst und aufeinander gleitend ausgebildet sind.

4. Spannpratze nach einem der Ansprüche 1 bis 3,
**dadurch gekennzeichnet, dass** der Spannsockel (10) im Einbauzustand mit einer ersten Führungsfläche (24) an einer zweiten Führungsfläche (25) am Befestigungsschenkel (26) des Spannfingers (20) so anliegt, dass der Befestigungsschenkel (26) des Spanfingers (20) verdrehsicher aber in Spannrichtung verschiebbar auf dem Spannsockel (10) angeordnet ist.

5. Spannpratze nach einem der Ansprüche 1 bis 4,
**dadurch gekennzeichnet, dass** der Spannsockel (10) einen auskragenden Flansch (12) aufweist, mit dem der Spannsockel (10) im Einbauzustand auf eine Ausnehmung (41) in der Unterlage (40) aufsitzt.

6. Spannpratze nach einem der Ansprüche 1 bis 5,
**dadurch gekennzeichnet, dass** die Spannpratze ein Teil eines Schneidwerkzeuges zur Zerspanung von metallischen Werkstoffen ist, wobei die Unterlage (40) ein Klemmhalter und der Gegenstand (50) eine Schneidplatte ist.

7. Spannpratze nach einem der Ansprüche 1 bis 6,
**dadurch gekennzeichnet, dass** am Spannschenkel (27) der Spannfingers (20) direkt oder über eine Druckplatte (23) eine Erhebung (28) wie z. B. ein Nocken angeordnet ist, die bzw. der im Einbauzustand in eine entsprechende Mulde im Gegenstand oder in der Schneidplatte eingreift.

8. Spannpratze nach Anspruch 7, **dadurch gekennzeichnet,**
**dass** die Erhebung (28) oder der Nocken am Spannschenkel (27) des Spannfingers (20) als kreisförmiger Ring ausgebildet ist, die bzw. der im Einbauzustand in einen Gegenstand (50) bzw. eine Schneidplatte mit einer kugel- oder kreisförmigen Erhebung eingreift und hierbei die Erhebung umgreift.
